# EUROPEAN PATENT SPECIFICATION

(11) **EP 1 553 318 B1**
(45) Date of publication and mention of the grant of the patent: **18.07.2007**
(21) Application number: 05006078.9
(22) Date of filing: 12.12.2001
(51) Int. Cl.: F16D 43/08, F16D 43/10, B60W 10/02

(54) **Vehicular centrifugally operated master friction clutch**
Als Anfahrkupplung dienende Fliehkraftkupplung für Fahrzeuge
Embrayage principal centrifuge pour véhicules

(30) Priority: 13.12.2000 US 255358 P
(43) Date of publication of application: 13.07.2005
(62) Divisional of application: 01270692.5
(73) Proprietor: Eaton Corporation, Cleveland, Ohio 44114-2584 (US)
(72) Inventor: Genise, Thomas Alan, Dearborn, MI 48128 (US)
(74) Representative: Rüger, Barthelt & Abel Patentanwälte

(56) References cited:
- DE-B- 1 090 103
- FR-A- 992 523
- FR-A- 1 096 552
- GB-A- 631 783
- US-A- 2 441 928
- US-A- 5 860 890

## Description

### FIELD OF THE INVENTION

The present invention relates to a centrifugal master clutch and a vehicular drivetrain utilizing same. Generally, the present invention relates to a vehicular driveline system including an automated vehicular transmission system and comprising an engine, a multiple ratio transmission, a centrifugally operated master friction clutch for drivingly coupling the engine to the transmission and a controller for controlling fueling of the engine during vehicle launch conditions, as a function of throttle position and other sensed system operating conditions such as at least one of engine speed, transmission input shaft speed, transmission output shaft speed, engine torque and engaged gear ratio.

In particular, the present invention relates to a vehicular centrifugally operated master friction clutch for coupling an output member of an engine to a transmission input shaft, said clutch including a driving member assembly rotatable with said engine output member and a driven member assembly rotatable with said transmission input shaft. The present invention further relates to a drivetrain comprising an engine, a multiple ratio transmission and such a centrifugally operated master friction clutch.

### DESCRIPTION OF THE PRIOR ART

Automated mechanical transmission systems not requiring the vehicle driver or operator to operate the vehicle master clutch (so called "two-pedal systems"), and clutch controls and actuators therefore, are known in the prior art as may be seen by reference to U.S. Patent No.'s: 4,081,065; 4,361,060; 4,936,428; 5,439,428; 5,634,867; 5,630,773; 5,960,916 and; 5,947,847. These systems are not totally satisfactory as separate clutch actuators, sensors and/or, electrical and/or fluid power (i.e., compressed and/or hydraulic) connections thereto are required which adds to the expense of providing, assembling and maintaining such systems.

Centrifugally operated friction clutches are well known in the prior art and typically include a driving input member driven by a prime mover, usually an electric motor or internal combustion engine, and weights rotatable with the driving member which, upon rotation of the driving member, will move radially outwardly under the effect of centrifugal force to cause the driving input member to frictionally engage a driven output member. Examples of centrifugally operated clutches may be seen by reference to U.S. Patent No.'s: 3,580,372; 3,580,372; 3,696,901; 5,437,356; 3,810,533; 4,819,779; 5,441,137; 5,730,269; and; 4,610,343.
FR 992 523 A discloses a vehicular centrifugally operated master friction clutch for coupling an output member of an engine to a transmission input shaft, said clutch including a driving member assembly rotatable with said engine output member and a driven member assembly rotatable with said transmission input shaft, said clutch comprising:
a plurality of flyweights carried by said driving member assembly for rotation therewith and radial movement relative thereto;
return members urging said flyweights radially inwardly;
actuation members carried by said flyweights for movement therewith, said actuation members acting on an axially movable plate whereby as said flyweights move radially outwardly said axially movable plate will be urged in an axial direction away from an axially fixed reaction plate;
an axially movable pressure plate rotatable with said driving member assembly for applying a clamping force to frictionally engage a friction member rotatable with said input shaft with a friction member rotatable with said driving member, and
a resilient member axially interposed between said axially movable plate and said pressure plate for limiting the magnitude of said clamping force.

Fully or partially automated mechanical transmission systems that, upon determining that a dynamic shift from a currently engaged ratio into neutral and then into a target ratio is desirable, will, while maintaining the vehicle master friction clutch engaged, initiate automatic fuel control to cause reduced torque across the jaw clutches to be disengaged, are known in the prior art as may be seen by reference to U.S. Patent No.'s: 4,850,236; 5,820,104; 5,582,558; 5,735,771; 5,775,639; 6,015,366; and 6,126,570. These systems include systems that attempt to fuel the engine to achieve a sustained zero driveline torque, and systems, which force torque reversals, see U.S. Patent No.: 4,850,236. These systems, upon sensing a neutral condition, will, while maintaining the master clutch engaged, cause the engine to rotate at a speed determined to cause synchronous conditions for engaging the target ratio.

Vehicular driveline systems, especially for heavy-duty vehicles, utilizing centrifugal clutches have not been satisfactory as the engines were typically controlled by throttle device position, not on a closed loop basis based upon a target engine speed and/or engine torque, and thus did not provide acceptable control for smooth vehicle launch and low speed operation. Prior art vehicular driveline systems utilizing centrifugal master clutches were not provided with clutches having damage and/or overheating protection and/or were not configured to lock up and release at engine speeds selected to permit dynamic shifting with the master clutch engaged.

### SUMMARY OF INVENTION

In accordance with the present invention, the drawbacks of the prior art are reduced or minimized by the provision of a centrifugal master friction clutch and a vehicular drivetrain, as claimed in claim 1 and 12, respectively.

The invention is particularly suited for use with an automated transmission system which utilizes closed loop control to provide acceptable performance for heavy duty vehicle launch operations and low speed operation and is configured to allow dynamic shifting with the master clutch engaged. Preferably, the closed loop control will provide protection from damage and/or overheating. The above is accomplished by providing a centrifugal clutch structure according to the present invention which will initially lockup at an engine speed below the speed at which upshifts are required and will not release from a lockup condition at engine speeds above (i) the highest speeds at which down shifts are required and (ii) the lowest allowable expected engine speed after completion of an upshift and by controlling fueling of the engine during launch to cause engine speed and/or engine torque to equal or not exceed a target value determined as a function of sensed input signal values indicative of two or more of throttle device position, engine speed, engine torque, transmission input shaft speed, transmission output shaft speed, transmission engaged ratio and clutch slip.

The centrifugal master clutch requires no external clutch actuator or sensor, and no connections to mechanical linkages, electrical power and/or fluid power.

Accordingly, it is an object of the present invention to provide a new and improved centrifugally operated vehicular master friction clutch and vehicular drivetrain utilizing same.

This and other objects and advantages of the present invention will become apparent from a reading of the following description of the preferred embodiment taken in connection with the attached drawings.

### BRIEF DESCRIPTION OF THE DRAWINGS

Fig. 1 is a schematic illustration of a vehicular drivetrain using the centrifugal clutch and engine fuel control of the present invention.

Fig. 2 is a schematic illustration, in graphical format, of the clamp force characteristics of the centrifugal clutch of the present invention at various engine speeds.

Fig. 3 is a schematic illustration, in graphical format, of target engine speeds for various throttle positions at vehicle launch for the system of the present invention.

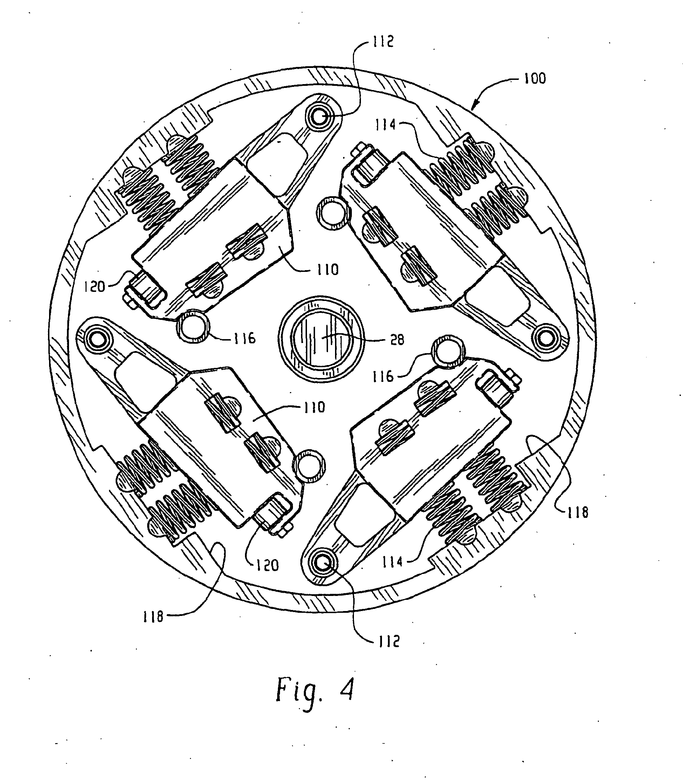

Fig. 4 is a partial top view, in section, of the cover and centrifugal mechanism of the clutch of the present invention.

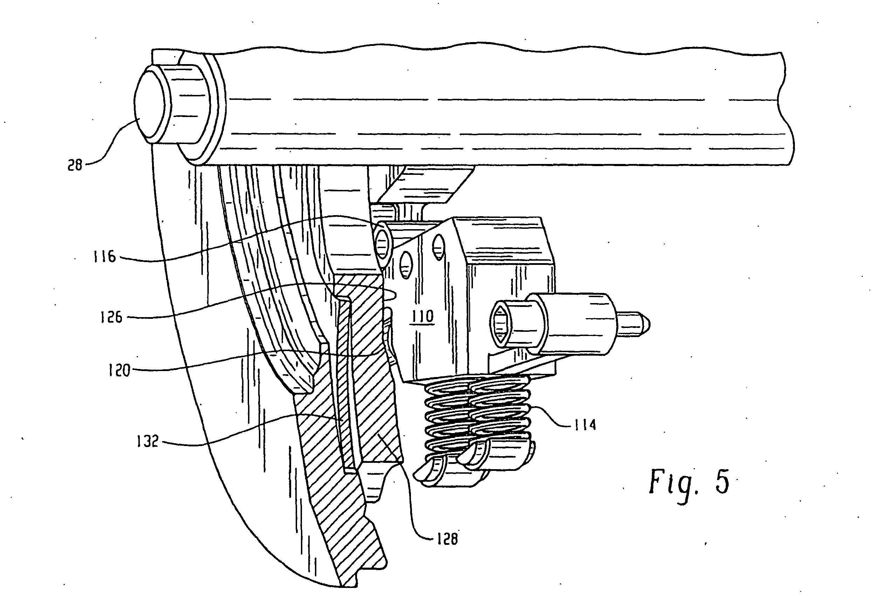

Fig. 5 is a partial sectional view of the roller, ramp, and clamp force limiting spring mechanism utilized with the centrifugal mechanism of Fig. 4.

Fig 6A and 6B are partial sectional views illustrating the position of the flyweights in the fully radially inward clutch disengaged position and the fully radially outward clutch fully engaged position, respectively.

Fig. 7 is a schematic partial sectional view of the present invention.

Fig. 8A and 8B are schematic illustrations, in flowchart format, of a launch logic.

### DESCRIPTION OF THE PREFERRED EMBODIMENT

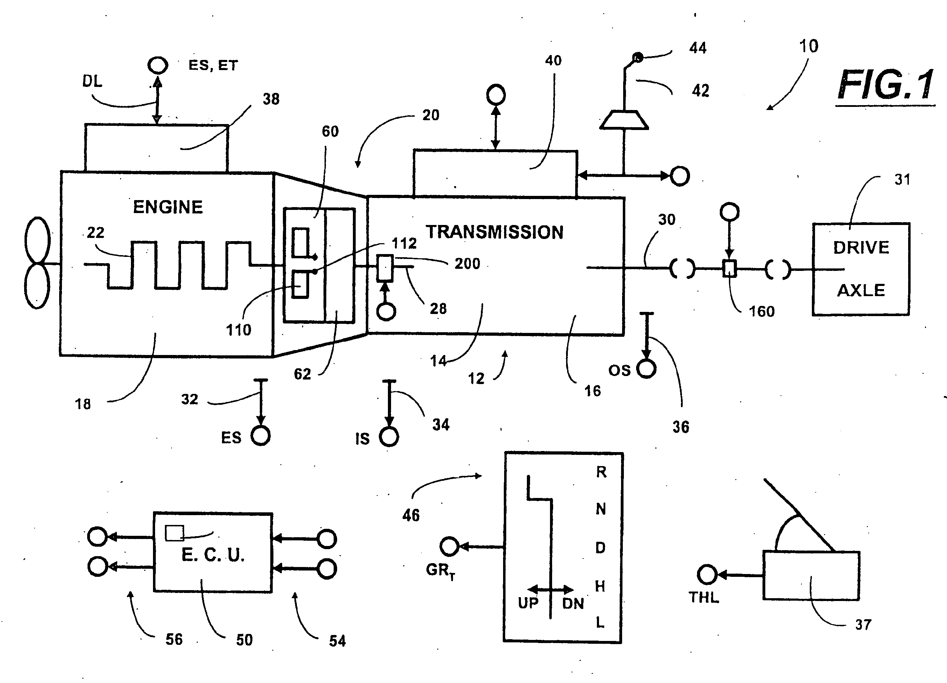

An at least partially automated vehicular drivetrain system 10 using the centrifugally operated friction master clutch and control of the present invention is schematically illustrated in Fig. 1. System 10 may be fully automated, as seen by way of example in U.S. Patent No.: 4,361,060, partially automated, as seen by way of example in U.S. Patent No's: 4,648,290 and 5,409,432, or manual with controller assist, as seen by way of example in U.S. Patent No's: 4,850,236; 5,582,558; 5,735,771; and 6,015,366.

In system 10, a change-gear transmission 12 comprising a main transmission section 14 connected in series with a splitter-type auxiliary transmission section 16 is drivingly connected to an internal combustion engine 18, such as a well-known gasoline or diesel engine, by the centrifugal master friction clutch 20 of the present invention. Transmissions 12, by way of example, may be of the type well known in the prior art and are sold by the assignee of this application, EATON CORPORATION, under the trademarks "Super-1 0" and "Lightning", and may be seen in greater detail by reference to U.S. Pat. No's: 4,754,665; 6,015,366; 5,370,013; 5,974,906; and 5,974,354.

Engine 18 includes a crankshaft 22, which is attached to a driving member 60 of centrifugal master clutch 20, which frictionally engages with, and disengages from, a driven member 62, which is attached to the input shaft 28 of the transmission. A transmission output shaft 30 extends from the auxiliary transmission section 16 for driving connection to the vehicular drive wheels, as through a drive axle 31 or transfer case.

The terms "engaged" and "disengaged" as used in connection with a master friction clutch refer to the capacity, or lack of capacity, respectively, of the clutch to transfer a significant amount of torque. Mere random contact of the friction surfaces, in the absence of at least a minimal clamping force, is not considered engagement.

As may be seen from Fig. 1, centrifugal clutch 20 requires no external clutch actuator and is operated as function of the rotational speed (ES) of the engine. Centrifugal clutch 20 also requires no connections to operating linkages, command signal inputs, power electronics and/or compressed air and/or hydraulic conduits. The most economical application of the present invention is with a dry clutch, however, the present invention is also applicable to wet clutch technology.

Transmission system 10 further includes rotational speed sensors 32 for sensing engine rotational speed (ES), 34 for sensing input shaft rotational speed (IS), and 36 for sensing output shaft rotational speed (OS), and providing signals indicative thereof. A sensor 37 provides a signal THL indicative of throttle pedal position or of torque demand. The signal is usually a percentage (0% to 100%) of fuel throttle position. Engine 18 may be electronically controlled, including an electronic controller 38 communicating over an electronic data link (DL) operating under an industry standard protocol such as SAE J-1922, SAE J-1939, ISO 11898 or the like.

An X-Y shift actuator, which by way of example may be of the types illustrated in U.S. Pat. No's: 5,481,170; 5,281,902; 4,899,609; and 4,821,590, may be provided for automated or shift-by-wire shifting of the transmission main section and/or auxiliary section. Alternately, a manually operated shift lever 42 having a shift knob 44 thereon may be provided. Shift knob 44 may be of the type described in aforementioned U.S. Pat. No: 5,957,001. As is well known, shift lever 42 is manually manipulated in a known shift pattern for selective engagement and disengagement of various shift ratios. Shift knob 44 may include an intent to shift switch 44A by which the vehicle operator will request automatic engine fueling control to relieve torque lock and allow a shift to transmission neutral. A shift selector 46 allows the vehicle driver to select a mode of operation and provides a signal GR_{T} indicative thereof.

System 10 includes a control unit 50, preferably a microprocessor-based control unit of the type illustrated in U.S. Pat. No's: 4,595,986; 4,361,065; and 5,335,566 for receiving input signals 54 and processing same according to predetermined logic rules to issue command output signals 56 to system actuators, such as engine controller 38, shift actuator 40, and the like.

As is known, to disengage a jaw clutch in a vehicular mechanical transmission, especially in a heavy-duty vehicle, it is necessary to relieve torque lock at the engaged jaw clutch. If opening the master friction clutch 20 is not desirable, torque lock can be relieved by fueling the engine to cause assumed zero driveline torque and/or by forcing torque reversals, which will positively cause crossings of zero driveline torque.

Fully or partially automated mechanical transmission systems that, upon determining that a shift from a currently engaged ratio into neutral and then into a target ratio is desirable, will, while maintaining the vehicle master friction clutch engaged, initiate automatic fuel control to cause reduced torque across the jaw clutches to be disengaged, are also known in the prior art as may be seen by reference to above-mentioned U.S. Patent No.'s: 4,850,236; 5,582,558; 5,735,771; 5,775,639; 6,015,366; and 6,126,570. Shifting with the master clutch remaining engaged is preferred in many situations, as such shifts tend to be of a higher shift quality and/or cause less wear on the driveline. These systems include systems that attempt to fuel the engine to achieve and maintain a zero driveline torque, see U.S. Patent No.: 4,593,580, and systems that fuel the engine to force one or more torque reversals, see U.S. Patent No.: 4,850,236. Upon sensing a transmission neutral condition, the clutch is maintained engaged and the engine speed commanded to a substantially synchronous speed for engaging a target gear ratio (ES=OSxGR_{T}).

Control of engine torque to achieve a desired output or flywheel torque is known as and may be seen by reference U.S. Pat No. 5,620,392. Engine torque as used herein refers to a value indicative of an engine torque, usually gross engine torque, from which an output or flywheel torque may be calculated or estimated. The relationship of gross engine torque to flywheel torque is discussed in U.S. Pat. No's: 5,509,867 and 5,490,063.

One or more engine torque's or torque limit values may be commanded on, or read from, an industry standard data link, DL, such as an SAE J-1922, SAE J-1939 or ISO11898 compliant datalink.

By way of example, datalinks complying to the SAE J1939 or similar protocol, allow the system controller 50 to issue commands over the datalink for the engine to be fueled in one of several modes, such as (i) in accordance with the operator's setting of the throttle, (ii) to achieve a commanded or target engine speed (ES=ES_{T}), (iii) to achieve a commanded or target engine torque (ET=ET_{T}) and (iv) to maintain engine speed and engine torque below limits (ES<ES_{MAX} and ET<ET_{MAx}). Many input/informational signals, such as engine speed (ES), engine torque (ET), and the like may also be carried by the datalink.

The structure of the centrifugal clutch 20 will be described in greater detail below. Clutch 20 includes an input or driving portion 60 fixed for rotation with engine crankshaft 22 (usually at the engine flywheel), and an output or driven portion 62 fixed for rotation on transmission input shaft 28. As is known, rotation of the input member 60 will cause clutch 20 to engage and drivingly connect the engine output, usually an engine flywheel, or the like, to the transmission input shaft 28. The clamping force, and thus the torque transfer capacity of the clutch 20 is a function of rotational speed (ES) of engine 18 and clutch input member 60. The clutch 20 should reach incipient engagement at an engine speed slightly greater than engine idle, and should fully engage at an engine speed lower than the engine speed at which a first upshift is required. Unlike typical spring applied master friction clutches, which are normally engaged, clutch 20 is disengaged at lower engine speeds.

To allow proper vehicle launch and dynamic shifting with the master clutch engaged, clutch 20, once fully engaged, should remain fully engaged at engine speeds greater than (i) the highest expected speed at which downshifts are initiated and (ii) the minimum expected engine speed after an upshift. Incipient engagement is the initial torque transfer contact of clutch friction surfaces as may be seen by reference to U.S. Patent No's: 4,646,891 and 6,022,295. Logic for only initiating single or skip upshifts only if the expected engine speed at completion of the shift exceeds a minimum reference value may be seen by reference to U.S. Patent No's: 6,113,516 and 6,149,545.

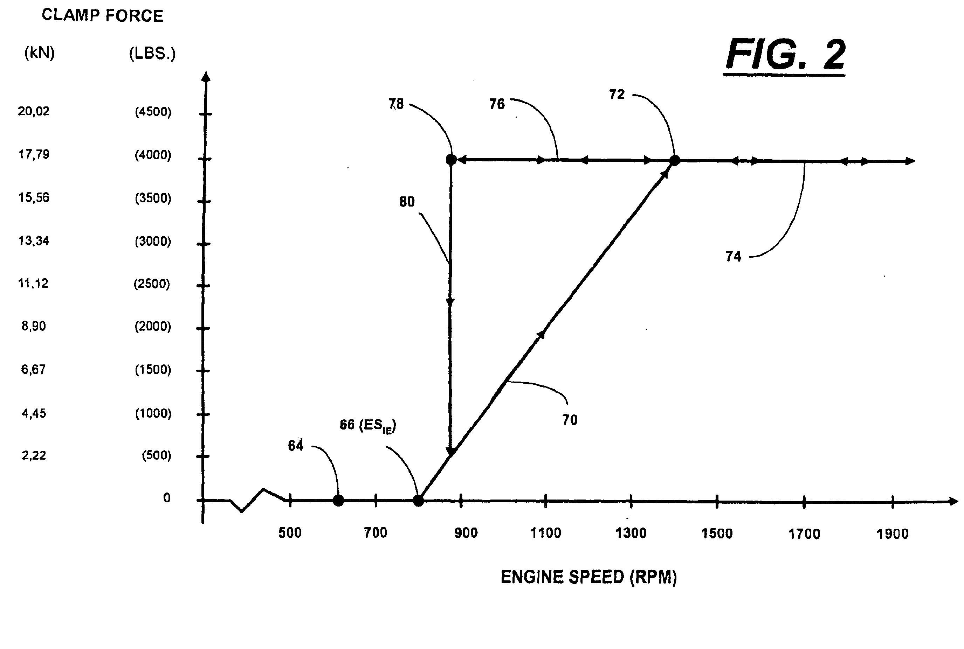

Figure 2 is a graphical representation of the clamping force, of a preferred embodiment the clutch 20, and thus the torque transfer capacity, at various engine speeds.

In the illustrated example, system 10 is a heavy duty truck driveline, engine 18 is an electronically controlled diesel engine having an idle speed of about 600RPM to 700RPM, point 64, and a governed top speed of about 1800RPM to 2000RPM. In the preferred embodiment, the clutch 20 will move to incipient engagement at about 800 RPM, point 66 (ES_{IE}), which is slightly above idle, and will have an increasing clamp load, line 70, as engine speed increases. The clutch will be most fully engaged at or below the capped maximum clamp force, 17,8 kN (4000 pounds), at about 1400 RPM, point 72. Once at maximum clamp load, which is selected to lock up the clutch under extreme conditions (i.e., substantially zero slip at considerably greater than expected torque loads), the clutch 20 will remain locked up, lines 74 and 76, until engine speed becomes less than about 850 RPM, point 78. At the release point, the clutch 20 will very rapidly disengage with decreasing engine speed, line 80, to prevent engine stalling.

850 RPM is below (i) the minimum engine speed at which downshifts will be commanded and (ii) the minimum expected engine speed at completion of an upshift at which an upshift, single or skip, will be initiated, see U.S. Patent No. 6,149,545. Accordingly, a centrifugal clutch 20 having the performance characteristics indicated on Fig. 2, which will allow a smooth modulated vehicle launch, and will assure that the clutch remains engaged for dynamic upshifting and downshifting.

The structure of a preferred embodiment of centrifugal clutch 20 may be seen by reference to Fig's: 5, 6,A, 6B, and 7. Clutch 20 includes a clutch bell housing assembly 100, friction disc assembly 102, intermediate pressure plate 104, and friction disc assembly 106. As is well known from conventional clutches, bell housing assembly 100 and intermediate pressure plate 104 mount to the engine flywheel for rotation therewith and comprise the driving portion 60 of the clutch, friction disc assemblies 102 and 106 are typically splined to transmission input shaft 28 and comprise the driven portion 62 of the clutch.

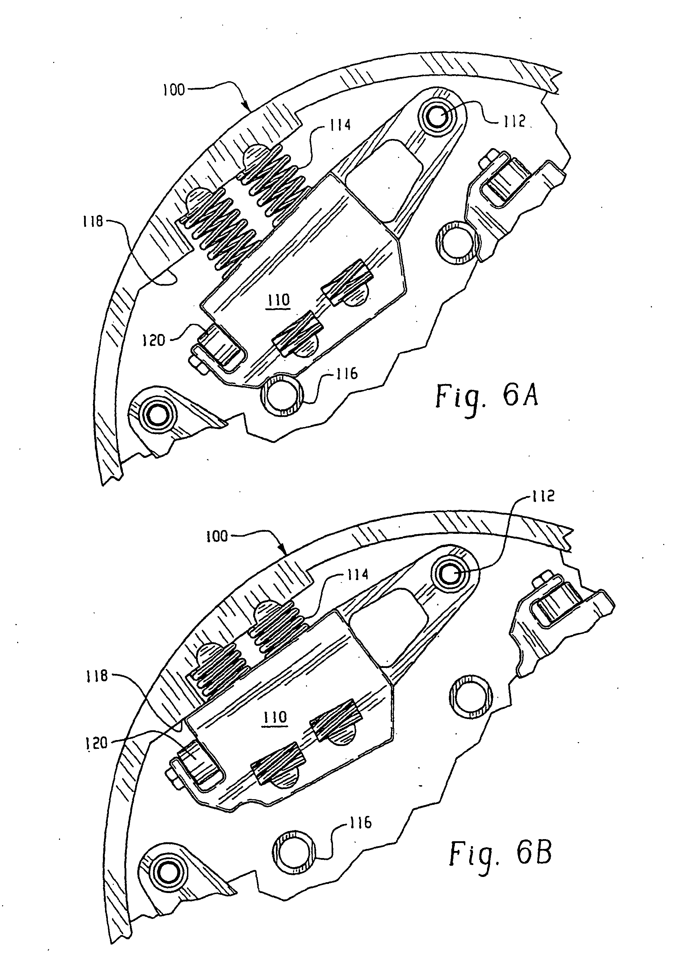

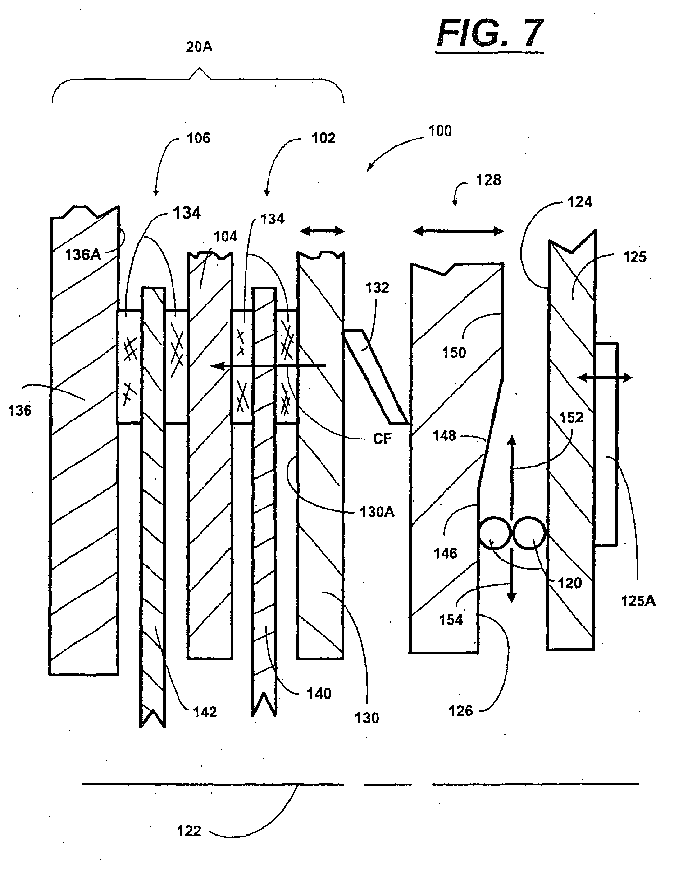

Portion 20A of clutch 20 may be substantially, structurally, and functionally identical to existing dual plate clutches. The bell housing assembly includes four flyweights 110, which are pivoted to the housing assembly at pivot pins 112. Return springs 114 bias the flyweights 110 radially inwardly to rest on stops 116 (see Fig. 6A). A stop member 118 limits the radially outward movement of the flyweights (see Fig.6B). As the engine and the housing 100 rotate, the effect of centrifugal force will cause the flyweights 110 to move against the bias of springs 114 from the position of Fig. 6A to the position of Fig. 6B. The flyweights 110 each carry one or more rollers 120 or functionally similar wedging member, which will act between a reaction surface and a ramp to provide an axial clamping force for engaging the master friction clutch 20. Fig. 7 is a schematic illustration of the operational members acted upon by rollers 120. The members of the clutch 20 are shown in fragments as rotating about the rotational axis 122 of input shaft 28.

Rollers 120 are received between a substantially flat surface 124 of a fixed reaction plate 125 and a ramped surface 126 of an axially movable ramp plate 128. Alternatively, surface 124 could be ramped and/or the wedging member could be of a wedge configuration. Other wedging configurations, may be utilized. The reaction plate 125 may be manually and/or automatically adjustable by an adjustment mechanism 125A to take up wear or the like. The ramp plate acts on an axially movable main pressure plate 130 through a preloaded spring member 132, which will limit the axial force applied to the main pressure plate 130 by the ramp plate. Main pressure plate 130 will apply a clamping force CF on the friction pads 134 of the friction plates which are trapped between surface 130A of the main pressure plate 130 and the intermediate pressure plate 104 and the intermediate pressure plate 104 and surface 136A of the engine flywheel 136.
The hub portions 140 and 142 of the friction plates 102 and 106, respectively, are adapted to be splined to input shaft 28 for rotation therewith while plates 125, 128, 130, and 104 rotate with the engine flywheel 136.

At rest, one of the rollers 120 will engage the recessed portion 146 of surface 126 and will not apply a leftward axial clamping force to the friction pads. As the roller travels sufficiently radially outwardly, and onto the ramped portion 148 of the ramp surface 126, an increasing axial clamping force is applied (see line 70 on Fig. 2). As the roller moves further radially outwardly onto the flat extended portion of 150 of surface 126, the clamp force will remain at a capped value (see lines 74 and 76 of Fig. 2) as limited by preload spring 132. The flyweights 110 will hit stops 118 prior to full compression of springs 132. Applying force through a spring to limit the maximum force applied is known in the prior art as may be seen by reference to U.S. Pat No. 5,901,823.

A greater centrifugal force 152 is required to move rollers 120 up ramp portion 148 to flat portion 150 than is required to retain the rollers on the flat portion against the effect of spring force 154 from return springs 114. This accounts for the difference between the initial maximum clamp force engine RPM value, point 72 on Fig. 2, and the release engine RPM value, point 78 on Fig. 2. Back tapers and/or recesses may be added to surface 150 and/or the inclination of ramp 148 and/or flat portion 150, the relative masses and/or the spring rate of spring 114 may be modified to change the engine speed of disengagement, point 78 on Fig. 2.

As is known, to launch a heavy duty vehicle, which will occur in a start ratio (i.e., at a relatively high ratio of input shaft speed to output shaft speed), less torque at the input shaft is required (for example, 813 to 1220 Nm (600 to 900 lbs. ft.), depending on grade) than to move the vehicle at high speeds. Typical heavy-duty vehicle diesel engines will have a maximum torque output of about 1898 to 2982 Nm (1400 to 2200 lbs-ft.) at a maximum torque RPM.

For one embodiment of master friction clutch 20, 4,45 kN (1000 lbs.) of clamp force will provide a torque capacity of about 813 to 949 Nm (600 to 700 lbs-ft.), while 17,8 kN (4000 lbs.) of clamp force will provide a torque capacity of about 4067 Nm (3000 lbs-ft.), which is well in excess of engine torque capacity and driveline capacity and provides a large margin of safety when the clutch is in the capped clamp load condition, lines 74 and 76 of Fig. 2.

At vehicle launch, i.e., when starting the vehicle from stop, the clutch 20 should lock up at between about 750 RPM and 950 RPM, depending if starting up a steep grade or in other high resistance conditions. In the vehicle launch mode i.e., when vehicle is stopped or at very low vehicle speed, clutch not fully engaged and start ratio engaged (Rev, 1st, 2nd, 3rd or 4th in a 10 forward speed transmission), the control logic will operate in a launch mode.

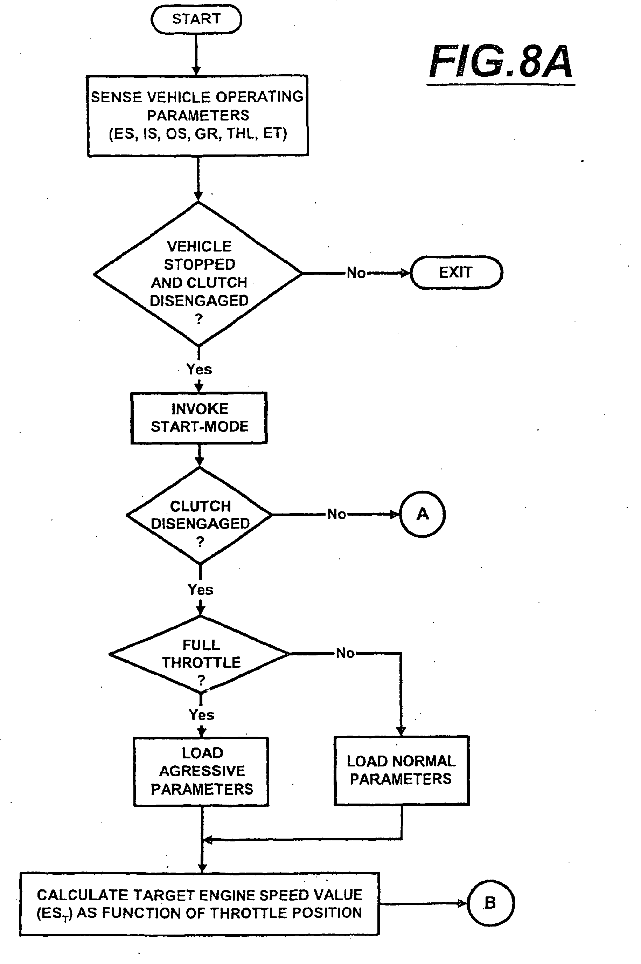

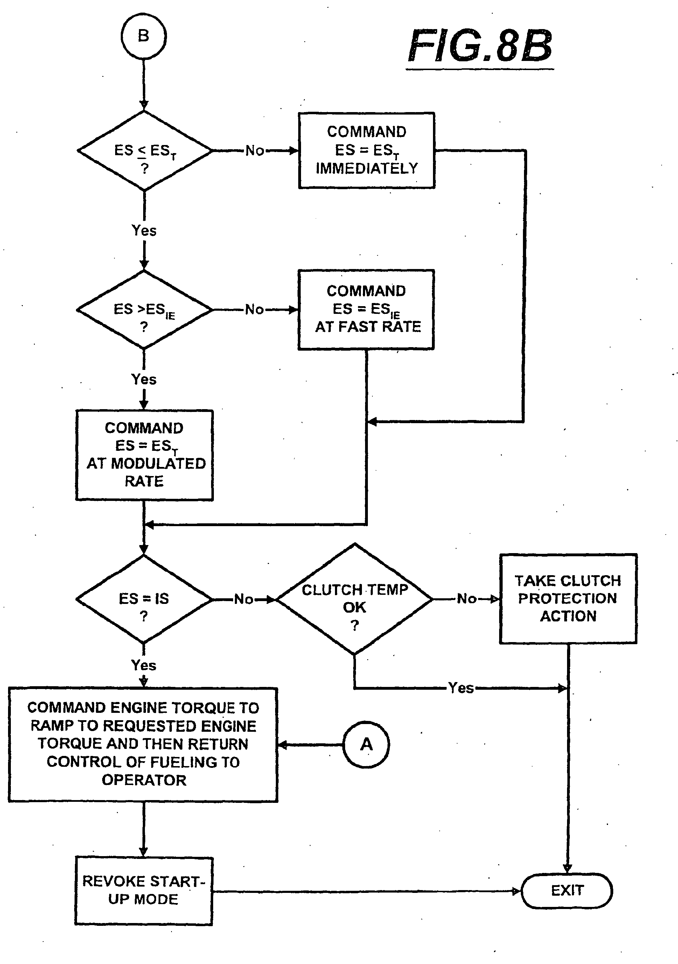

In the launch mode, the transition from disengagement to engagement of the centrifugal master clutch is dependent upon increasing engine speed. Without an engine speed controlling algorithm, the system is prone to abuse and harsh engagements by careless drivers since a rapid increase in engine speed is equivalent to "dumping" or "popping" the clutch in a conventional manual clutch arrangement. In the preferred embodiment of the present invention, by using the SAE J1939 communication link, the control algorithm uses the "speed and torque limit" mode to control engine speed and rate of change of engine speed during engagement. Once engagement is sensed, (by monitoring the decreasing difference between engine speed and input shaft speed), the algorithm switches to a controlled ramp up of requested engine torque limit starting from existing engine torque at the point of full engagement. Once the torque has exceeded driver demand, full throttle control is returned to the driver. Figs. 8A and 8B are a flow chart illustration of a launch control.

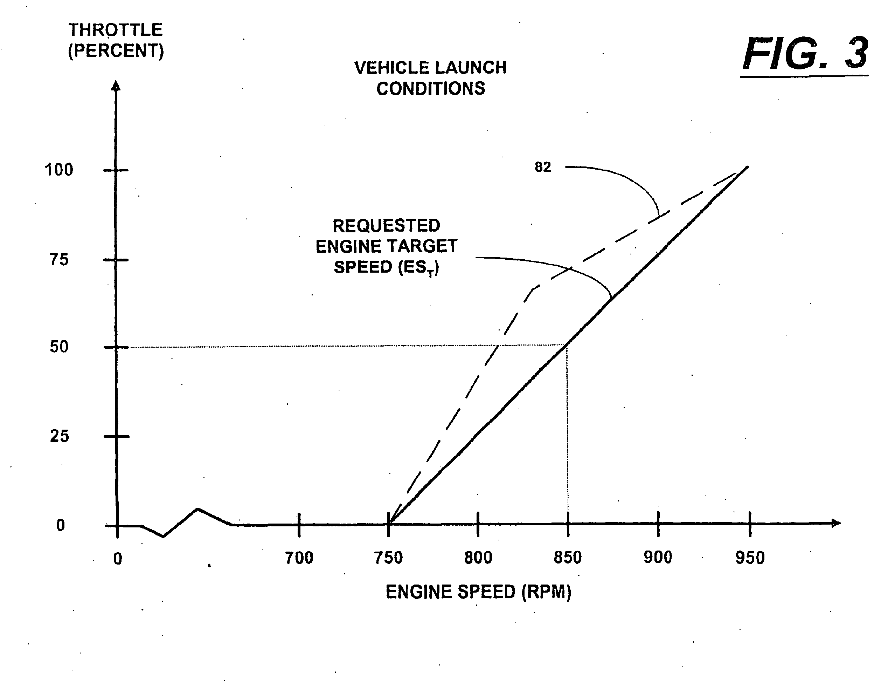

The centrifugal clutch 20 is designed to fully engage at an approximate engine RPM, (ex: 900RPM). The algorithm uses a throttle position modulated engine speed limit, (ex: 750RPM to 950RPM), to control the engine speed during engagement. As an example, see Fig. 3, at 50% throttle position the engine speed would be limited to 850RPM until engagement was sensed. At the point of engagement the actual engine torque value is captured and used as the starting point of the throttle "recovery phase". The J1939 "speed and torque limit" mode is used to ramp the torque limit up from the starting torque point to a final value. Torque will be ramped up at a rate, which may vary with throttle position and/or engaged gear ratio. The ramp up rate will preferably be selected to minimize driveline oscillations and avoid the natural frequencies of the driveline.

Since a centrifugal clutch provides increasing clutching force, (torque) with increasing rotational speed of the clutch, the algorithm uses the throttle pedal setting to maintain a desired engine speed limit which translates into a desired torque in the driveline. Figure 3 illustrates a graph of target engine speeds for throttle pedal positions. By way of example, if the throttle is moved from a zero percent displacement to a fifty percent displacement, the engine will be commanded to quickly ramp from idle (about 600-650RPM) to 750RPM, which is the point of clutch incipient engagement, and then increase to 850RPM in a slower modulated manner. Testing has shown that a quick ramp rate of about 500RPM/SEC and a modulated ramp rate of about 200RPM/SEC provide satisfactory results. A performance set of ramps, if the driver applies full (100%) throttle, may be utilized, such as, for example, 750RPM/SEC to incipient engagement engine speed and then 250RPM/SEC to target speed.

As used herein, an engine speed may be commanded directly by commanding a specific engine speed, indirectly by commanding an engine speed limit, or by commanding a related parameter such as an engine torque or engine torque limit.

For decreasing throttle position, engine speed is commanded to immediately equal the lower target value. As engine is fueled to the launch target value engine speed (such as 850RPM at 50% throttle), and maintained at that value, while engine speed (ES) is compared to transmission input shaft speed (IS), to sense clutch slip (ES-IS). When clutch engagement without slip is sensed (ES-IS<REF, REF equal to about±50RPM), the engine will be commanded to ramp up to torque value corresponding to throttle pedal position and then control of fueling is returned to the operator. The ramp rates may be modified as a function of the start ratio being utilized, with quicker rates at higher start ratios (3^{rd} or 4^{th}) than at lower start ratios (1^{st} or 2^{nd}). Throttle recovery logic, the logic by which fuel control is returned to the operator may be seen by reference to U.S. Patent No's: 4,493,228 and 4,792,901.

The engine speed target (ES_{T}) need not be a linear function of throttle position and may vary with sensed system parameters such as, for example, start ratio; see line 82 in Fig. 3. The relationship may also be varied in response to sensed clutch wear, performance degradation or the like.

The engine controls of the present invention may also be subject to engine and/or driveline torque limitations of the types seen in U.S. Patent No's: 5,797,110; 6,052,638 and; 6,080,082.

The control will, preferably, include overheating protection, which can occur from constant slipping of the clutch under torque (i.e., driver trying to maintain a stopped position on a grade by slipping the clutch). This can be sensed in several ways, such as, for example, sensing if vehicle acceleration is less than a reference value ((dos/dt)<REF?) or by sensing or estimating a clutch temperature from sensed vehicle operating conditions, see U.S. Patent No: 4,576,263.

Upon sensing a potential clutch over-heating problem, the control logic can react by increasing or decreasing engine RPM. If engine RPM is increased, the clutch will engage causing the operator to use a different method of maintaining vehicle position. If the engine speed is decreased, the driver will increase throttle position, which should cause increased engine speed and clutch lockup. To reduce the likelihood of using a slipping clutch to maintain a stopped position on a grade, the system could incorporate a hill hold device 160. The hill hold device would be controlled by ECU 50 and applied when the clutch was disengaged and the indicated vehicle speed was zero. The hill hold would be released when the throttle was applied and generated torque reached a predetermined level. Such hill holding devices may, by way of example, be a separate brake or retarding device or may utilize the vehicle foundation brakes.

In an alternate embodiment, a quick release 200 mechanism may be provided. This mechanism may be desirable in situations where upshifting on a severe grade (greater than 15% or 20%) may be required. Other severe operating conditions, such as heavy loading or the like may necessitate the use of the disconnect device 200. The quick release 200 mechanism is operated by commands from ECU 50 and may include a positive or a friction clutch device.

Accordingly, it may be seen that a new and improved transmission system and centrifugal master friction clutch therefor, is provided.

Although the present invention has been described with a certain degree of particularity, it is understood that the description of the preferred embodiment is by way of example only and that numerous changes to form and detail are possible without departing from the scope of the invention as hereinafter claimed.

## Claims

1. A vehicular centrifugally operated master friction clutch (20) for coupling an output member (136) of an engine (18) to a transmission input shaft (28), said clutch including a driving member assembly (60) rotatable with said engine output member and a driven member assembly (62) rotatable with said transmission input shaft, said clutch comprising:
a plurality of flyweights (110) carried by said driving member assembly for rotation therewith and radial movement relative thereto;
return members (114) urging said flyweights radially inwardly;
wedging members (120) fixed to said flyweights for radial movement therewith, said wedging members received between opposed surfaces (124 and 126) of a relatively axially fixed reaction plate (125) and an axially movable plate (128), one of said surfaces (126) defining a ramped portion (148) extending radially outwardly and axially toward the other of said surfaces whereby as said wedging member moves radially outwardly along said ramped portion said axially movable plate will be urged in an axial direction away from said reaction plate;
an axially movable pressure plate (130) rotatable with said driving member assembly for applying a clamping force (CF) to frictionally engage a friction member (140/142) rotatable with said input shaft with a friction member (136A/104/130A) rotatable with said driving member, and
a resilient member (132) axially interposed between said axially movable plate and said pressure plate for limiting the magnitude of said clamping force.

2. The centrifugally operated master friction clutch of claim 1 wherein said engine has a known idle speed and said flyweight and return members are configured such that said wedging members will be positioned radially inwardly of said ramped portion of said surface when said driving member is rotating at a speed no greater than said idle speed.

3. The centrifugally operated master friction clutch of claim 1 wherein said output member is an engine flywheel (136).

4. The centrifugally operated master friction clutch of claim 1 wherein said flyweights are pivotably (112) mounted on said driving member assembly.

5. The centrifugally operated master friction clutch of claim 1 wherein said return members are compression springs.

6. The centrifugally operated master friction clutch of claim 1 wherein said wedge members are rollers rotatably carried by said flyweights.

7. The centrifugally operated master friction clutch of claim 1 wherein said relatively axially fixed plate (125) is associated with a wear adjustment mechanism (125A).

8. The centrifugally operated master friction clutch of claim 1 wherein said resilient member is a compression spring.

9. The centrifugally operated master friction clutch of claim 1 wherein said resilient member is a belleville washer.

10. The centrifugally operated master friction clutch of claim 1 wherein said clutch has a degree of engagement dependent upon the rotational speed of said driving member, said clutch being disengaged when said driving member is rotating at said engine idle speed, said clutch becoming incipiently engaged when said driving member is rotating at an incipient engagement engine speed (ES_{IE}) greater than said engine idle speed (ES_{IE}> ES_{IDLE}), said clutch achieving a maximum engagement (74/76) when said driving member is rotating at at least a lockup engine speed (ES_{LOCKUP}), said lockup engine speed greater than said incipient engagement engine speed (ES_{LOCKUP} > ES_{IE}), said clutch remaining at maximum engagement when said driving member is rotating at a disengagement engine speed (ES_{DISENGAGE}) less than said lockup engine speed (ES_{LOCKUP} > ES_{DISENGAGE}).

11. The centrifugally operated master friction clutch of claim 1 wherein said surface (126) defining said ramped portion (148) defines a further portion (150) located radially outwardly of said ramped portion and not extending axially towards said other surface (124) whereby movement of said wedging member moves axially inwardly and outwardly along said other portion will not further urge said movable plate axially away from said reaction plate.

12. A vehicular drivetrain (10) comprising an engine (18), a change gear transmission (12) and a centrifugally operated master friction clutch (20) for coupling an output member (136) of said engine to a transmission input shaft (28), said centrifugally operated master friction clutch including a driving member assembly (60) rotatable with said engine output member and a driven member assembly (62) rotatable with said transmission input shaft,
said clutch comprising:
a plurality of flyweights (110) carried by said driving member assembly for rotation therewith and radial movement relative thereto;
return members (114) urging said flyweights radially inwardly;
wedging members (120) fixed to said flyweights for radial movement therewith, said wedging members received between opposed surfaces (124 and 126) of a relatively axially fixed reaction plate (125) and an axially movable plate (128), one of said surfaces (126) defining a ramped portion (148) extending radially outwardly and axially toward the other of said surfaces whereby as said wedging member moves radially outwardly along said ramped portion said axially movable plate will be urged in an axial direction away from said reaction plate;
an axially movable pressure plate (130) rotatable with said driving member assembly for applying a clamping force (CF) to frictionally engage a friction member (140/142) rotatable with said input shaft with a friction member (136A/104/130A) rotatable with said driving member, and
a resilient member (132) axially interposed between said axially movable plate and said pressure plate for limiting the magnitude of said clamping force;
said engine having a known idle speed; and
said flyweight and return members configured such that said wedging members will be positioned radially inwardly of said ramped portion of said surface when said driving member is rotating at a speed no greater than said idle speed.

13. The drivetrain of claim 12 wherein said centrifugally operated master friction clutch has a degree of engagement dependent upon the rotational speed of said driving member, said clutch being disengaged when said driving member is rotating at said engine idle speed, said clutch becoming incipiently engaged when said driving member is rotating at an incipient engagement engine speed (ES_{IE}) greater than said engine idle speed (ES_{IE} > ES_{IDLE}), said clutch achieving a maximum engagement (74/76) when said driving member is rotating at at least a lockup engine speed (ES_{LOCKUP}), said lockup engine speed greater than said incipient engagement engine speed (ES_{LOCKUP} > ES_{IE}), said clutch remaining at maximum engagement when said driving member is rotating at a disengagement engine speed (ES_{DISENGAGE}) less than said lockup engine speed (ES_{LOCKUP} > ES_{DISENGAGE}).

14. The drivetrain of claim 12 wherein said surface (126) defining said ramped portion (148) defines a further portion (150) located radially outwardly of said ramped portion and not extending axially towards said other surface (124) whereby movement of said wedging member moves axially inwardly and outwardly along said other portion will not further urge said movable plate axially away from said reaction plate.

## Patentansprüche

1. Fliehkraftbetriebene Fahrzeughauptreibungskupplung (20) zur Ankupplung eines Ausgangselementes (136) eines Motors (18) an eine Getriebeeüigarigswelle (28), wobei die Kupplung eine gemeinsam mit dem Motorausgangselement drehbare Antriebselementandrdnung (60) und eine gemeinsam mit der Getriebeeingangswelle drehbare,Abtriebselementanordnung (62) enthält, wobei die Kupplung aufweist:
mehrere Fliehgewichte (110), die von der Antriebselementanordnung mit dieser drehfest und radial bewegbar in Bezug auf diese getragen sind;
Rückstellelemente (114), die die Fliehgewichte radial nach innen drücken;
Klemmverbindungselemente (120), die an den Fliehgewichten gemeinsam mit diesen radial bewegbar fixiert sind, wobei die Klemmverbindungselemente zwischen einander gegenüberliegenden Flächen (124 und 126) einer relativ axial fixierten Druckaufnahmeplatte (125) und einer axial bewegbaren Platte (128) aufgenommen sind, wobei eine der Flächen (126) einen rampenförmigen Abschnitt (148) definiert, der sich radial nach außen und axial zu der anderen der Flächen hin erstreckt, wobei, wenn sich das Klemmverbindungselement radial nach außen entlang des rampenförmigen Abschnitts bewegt, die axial bewegbare Platte in einer axialen Richtung von der Druckaufnahmeplatte weg gedrückt wird;
eine axial bewegbare Druckplatte (130), die gemeinsam mit der Antriebselementanordnung drehbar ist, um eine Klemmkraft (CF) zur reibschlüssigen verbindung eines Reibelementes (140/142), das gemeinsam mit der Eingangswelle drehbar ist, mit einem Reibelement (136A/104/130A), das gemeinsam mit dem Antriebselement drehbar ist, auszuüben, und
ein elastisches Element (132) das in Axialrichtung zwischen der axial bewegbaren Platte und der Druckplatte eingefügt ist, um die Stärke der Klemmkraft zu begrenzen.

2. Fliehkraftbetriebene Hauptreibungskupplung nach Anspruch 1, wobei der Motor eine bekannte Leerlaufdrehzahl aufweist und die Fliehgewicht- und Rückstellelemente derart konfiguriert sind, dass die Klemmverbindungselemente radial innen in Bezug auf den rampenförmigen Abschnitt der Fläche positioniert sind, wenn das Antriebselement mit einer Drehzahl rotiert, die nicht größer ist als die Leerlaufdrehzahl.

3. Fliehkraftbetriebene Hauptreibungskupplung nach Anspruch 1, wobei das Ausgangselement durch ein Motorschwungrad (136) gebildet ist.

4. Fliehkraftbetriebene Hauptreibungskupplung nach Anspruch 1, wobei die Fliehgewichte an der Antriebselementanordnung schwenkbar (112) montiert sind.

5. Fliehkraftbetriebene Hauptreibungskupplung nach Anspruch 1, wobei die Rückstellelemente Druckfedern sind.

6. Fliehkraftbetriebene Hauptreibungskupplung nach Anspruch 1, wobei die Klemmverbindungselemente durch die Fliehgewichte drehbar getragene Rollen sind.

7. Fliehkraftbetriebene Hauptreibungskupplung nach Anspruch 1, wobei die relativ axial fixierte Platte (125) einer Verschleißausgleichseinrichtung (125A) zugeordnet ist.

8. Fliehkraftbetriebene Hauptreibungskupplung nach Anspruch 1, wobei das elastische Element eine Druckfeder ist.

9. Fliehkraftbetriebene Hauptreibungskupplung nach Anspruch 1, wobei das elastische Element eine Tellerfeder ist.

10. Fliehkraftbetriebene Hauptreibungskupplung nach Anspruch 1, wobei die Kupplung einen von der Drehzahl des Antriebselementes abhängigen Eingriffsgrad aufweist, wobei die Kupplung außer Eingriff ist, wenn das Antriebselement bei der Motorleerlaufdrehzahl rotiert, wobei die Kupplung anfänglich in Eingriff gelangt, wenn das Antriebselement bei einer Anfangseingriffsmotordrehzahl (ES_{IE}) rotiert, die größer ist als die Motorlee.rlaufdrehzahl (ES_{IE}>ES_{LEERLAUF}) wobei die Kupplung einen maximalen Eingriff (74/76) erreicht, wenn das Antriebselement bei wenigstens einer Verriegelungsmotordrehzahl (ES_{VERRIEGELUNG}) rotiert, wobei die Verriegelungsmotordrehzahl größer ist als die Anfangseingriffsmotordrehzahl (ES_{VERRIEGELUNG}>ES_{IE}), wobei die Kupplung in einem maximalen Eingriff verbleibt, wenn das Antriebselement mit einer Außer-Eingriffs-Motordrehzahl (ES_{AUßEREINGRIFF}) rotiert, die kleiner ist als die Verriegelungsmotordrehzahl (ES_{VERRIEGELUNG}>ES_{AUßER EINGRIFF})

11. Fliehkraftbetriebene Hauptreibungskupplung nach Anspruch 1, wobei die Fläche (126), die den rampenförmigen Abschnitt (148) definiert, einen weiteren Abschnitt (150) definiert, der radial außerhalb des rampenförmigen Abschnitts angeordnet ist und sich nicht in Axialrichtung zu der anderen Fläche (124) hin erstreckt, wobei eine Bewegung des Klemmverbindungselementes, das sich axial nach innen und außen entlang des anderen Abschnitts bewegt, die bewegbare Platte nicht weiter axial weg von der Druckaufnahmeplatte drückt.

12. Fahrzeugantriebsstrang (10), der einen Motor (18), ein Geschwindigkeitswechselgetriebe (12) und eine fliehkraftbetriebene Hauptreibungskupplung (20) zur Ankupplung eines Ausgangselementes (136) des Motors an eine Getriebeeingangswelle (28) aufweist, wobei die fliehkraftbetriebene Hauptreibungskupplung eine Antriebselementanordnung (60), die gemeinsam mit dem Motorausgangselement drehbar ist, und eine gemeinsam mit der Getriebeeingangswelle drehbare Abtriebselementanordnung (62) enthält, wobei die Kupplung aufweist:
mehrere Fliehgewichte (110), die durch die Antriebselementanordnung mit dieser drehbar und radial bewegbar in Bezug auf diese getragen sind;
Rückstellelemente (114), die die Fliehgewichte radial nach innen drücken;
Klemmverbindungselemente (120), die an den Fliehgewichten gemeinsam mit diesen radial bewegbar fixiert sind, wobei die Klemmverbindungselemente zwischen einander gegenüberliegenden Flächen (124 und 126) einer relativ axial fixierten Druckaufnahmeplatte (125) und einer axial bewegbaren Platte (128) aufgenommen sind, wobei eine der Flächen (126) einen rampenförmigen Abschnitt (148) definiert, der sich radial nach außen und axial zu der anderen der Flächen hin erstreckt, wobei bei einer Bewegung des Klemmverbindungselementes radial nach außen entlang des rampenförmigen Abschnitts die axial bewegbare Platte in einer axialen Richtung weg von der Druckaufnahmeplatte gedrückt wird;
eine axial bewegbare Druckplatte (130), die gemeinsam mit der Antriebselementanordnung drehbar ist, um eine Klemmkraft (CF) zur reibschlüssigen Verbindung eines Reibelementes (140/142), das gemeinsam mit der Eingangswelle drehbar ist, mit einem Reibelement (136A/104/130A), das gemeinsam mit dem Antriebselement drehbar ist, auszuüben, und
ein elastisches Element (132), das in Axialrichtung zwischen der axial bewegbaren Platte und der Druckplatte eingefügt ist, um die Stärke der Klemmkraft zu begrenzen;
wobei der Motor eine bekannte Leerlaufdrehzahl aufweist; und
wobei die Fliehgewicht- und Rückstellelemente derart konfiguriert sind, dass die Klemmverbindungselemente radial innen in Bezug auf den rampenförmigen Abschnitt der Fläche positioniert sind, wenn das Antriebselement bei einer Drehzahl rotiert, die nicht größer ist als die Leerlaufdrehzahl.

13. Antriebsstrang nach Anspruch 12, wobei die Fliehkraft betriebene Hauptreibungskupplung einen von der Drehzahl des Antriebselementes abhängigen Eingriffsgrad aufweist, wobei die Kupplung sich außer Eingriff befindet, wenn das Antriebselement bei der Motorleerlaufdrehzahl rotiert, wobei die Kupplung anfänglich in Eingriff gelangt, wenn das Antriebselement mit einer Anfangseingriffsmotordrehzahl (ES_{IE}) rotiert, die größer ist als die Motorleerlaufdrehzahl (ES_{IE}>ES_{LEERLAUF}), wobei die Kupplung einen maximalen Eingriff (74/76) erreicht, wenn das Antriebselement bei wenigstens eine Verriegelungsmotordrehzahl (ES_{VERRIEGELUNG}) erreicht, wobei die Verriegelungsmotordrehzahl größer ist als die Anfangseingriffsmotordrehzahl (ES_{VERRIEGELUNG}>ES_{IE}), wobei die Kupplung in einem maximalen Eingriff verbleibt, wenn das Antriebselement mit einer Außer-Eingriffs-Motordrehzahl (ES_{AUßER-EINGRIFF}) rotiert, die kleiner ist als die Verriegelungsmotordrehzahl (ES_{VERRIEGELUNG}>ES_{AUßER-EINGRIFF}).

14. Antriebsstrang nach Anspruch 12, wobei die Fläche (126), die den rampenförmigen Abschnitt (148) definiert, einen weiteren Abschnitt (150) definiert, der radial außen in Bezug auf den rampenförmigen Abschnitt angeordnet ist und sich nicht axial zu der anderen Fläche (124) hin erstreckt, wobei eine Bewegung des Klemmverbindungselementes axial nach innen und außen entlang des anderen Abschnitts die bewegbare Platte von der Druckaufnahmeplatte nicht weiter axial weg drückt.

## Revendications

1. Embrayage principal à friction actionné de manière centrifuge pour véhicules (20) pour coupler un organe de sortie (136) d'un moteur (18) à un arbre d'entrée de transmission (28), ledit embrayage incluant un assemblage d'organe d'entraînement (60) pouvant tourner avec ledit organe de sortie du moteur et un assemblage d'organe entraîné (62) pouvant tourner avec ledit arbre d'entrée de transmission, ledit embrayage comprenant:
une pluralité de masselottes (110) portées par ledit assemblage d'organe d'entraînement pour une rotation avec celui-ci et un mouvement radial par rapport à celui-ci;
des organes de retour (114) poussant lesdites masselottes de manière radiale rentrante;
des organes de calage (120) fixés auxdites masselottes pour un mouvement radial avec celles-ci, lesdits organes de calage reçus entre des surfaces opposées (124 et 126) d'une plaque de réaction fixée de manière relativement axiale (125) et une plaque mobile de manière axiale (128), l'une desdites surfaces (126) définissant une portion en rampe (148) s'étendant de manière radiale sortante et de manière axiale vers l'autre desdites surfaces moyen par lequel lorsque ledit organe de calage se déplace de manière radiale sortante le long de ladite portion en rampe ladite plaque mobile de manière axiale sera poussée dans une direction axiale loin de ladite plaque de réaction;
une plaque de pression mobile de manière axiale (130) rotative avec ledit assemblage d'organe d'entraînement pour appliquer une force de serrage (CF) pour engager de manière frictionnelle un organe de friction (140/142) rotatif avec ledit arbre d'entrée avec un organe de friction (136A/104/130A) rotatif avec ledit organe d'entraînement, et
un organe flexible (132) interposé de manière axiale entre ladite plaque mobile de manière axiale et ladite plaque de pression pour limiter la grandeur de ladite force de serrage.

2. Embrayage principal à friction actionné de manière centrifuge de la revendication 1 dans lequel ledit moteur a une vitesse de ralenti connue et lesdits masselotte et organes de retour sont configurés de telle sorte que lesdits organes de calage seront positionnés de manière radiale rentrante de ladite portion en rampe de ladite surface lorsque ledit organe d'entraînement est en train de tourner à une vitesse qui n'est pas plus grande que ladite vitesse de ralenti.

3. Embrayage principal à friction actionné de manière centrifuge de la revendication 1 dans lequel ledit organe de sortie est un volant-moteur (136).

4. Embrayage principal à friction actionné de manière centrifuge de la revendication 1 dans lequel lesdites masselottes sont montées de manière pivotante (112) sur ledit assemblage d'organe d'entraînement.

5. Embrayage principal à friction actionné de manière centrifuge de la revendication 1 dans lequel lesdits organes de retour sont des ressorts de compression.

6. Embrayage principal à friction actionné de manière centrifuge de la revendication 1 dans lequel lesdits organes de cale sont des rouleaux portés de manière rotative par lesdites masselottes.

7. Embrayage principal à friction actionné de manière centrifuge de la revendication 1 dans lequel ladite plaque fixée de manière relativement axiale (125) est associée à un mécanisme d'ajustement d'usure (125A).

8. Embrayage principal à friction actionné de manière centrifuge de la revendication 1 dans lequel ledit organe flexible est un ressort de compression.

9. Embrayage principal à friction actionné de manière centrifuge de la revendication 1 dans lequel ledit organe flexible est une rondelle Belleville.

10. Embrayage principal à friction actionné de manière centrifuge de la revendication 1 dans lequel ledit embrayage a un degré d'engagement dépendant de la vitesse rotationnelle dudit organe d'entraînement, ledit embrayage étant désengagé lorsque ledit organe d'entraînement est en train de tourner à ladite vitesse de ralenti du moteur, ledit embrayage devenant engagé de manière amorcée lorsque ledit organe d'entraînement est en train de tourner à une vitesse de moteur d'engagement amorcé (ES_{IE}) supérieure à ladite vitesse de ralenti du moteur (ES_{IE}>ES_{RALENTI}), ledit embrayage accomplissant un engagement maximal (74/76) lorsque ledit organe d'entraînement est en train de tourner à au moins une vitesse de moteur de verrouillage (ES_{VERROUILLAGE}), ladite vitesse de moteur de verrouillage supérieure à ladite vitesse de moteur d'engagement amorcé (ES_{VERROUILLAGE}>ES_{IE}), ledit embrayage demeurant à un engagement maximum lorsque ledit organe d'entraînement est en train de tourner à une vitesse de moteur de désengagement (ES_{DESENGACEMENT}) inférieure à ladite vitesse de moteur de verrouillage (ES_{VERROUILLAGE}>ES_{DESENGAGEMENT}).

11. Embrayage principal à friction actionné de manière centrifuge de la revendication 1 dans lequel ladite surface (126) définissant ladite portion en rampe (148) définit une portion supplémentaire (150) située de manière radiale sortante de ladite portion en rampe et ne s'étendant pas de manière axiale vers ladite autre surface (124) moyen par lequel un mouvement dudit organe de calage se déplace de manière axiale rentrante et sortante, le long de ladite autre portion ne va pas pousser davantage ladite plaque mobile de manière axiale loin de ladite plaque de réaction.

12. Groupe motopropulseur pour véhicules (10) comprenant un moteur (18), une transmission de changement de vitesse (12) et un embrayage principal à friction actionné de manière centrifuge (20) pour coupler un organe de sortie (136) dudit moteur à un arbre d'entrée de transmission (28), ledit embrayage principal à friction actionné de manière centrifuge incluant un assemblage d'organe d'entraînement (60) pouvant tourner avec ledit organe de sortie du moteur et un assemblage d'organe entraîné (62) pouvant tourner avec ledit arbre d'entrée de transmission,
ledit embrayage comprenant;
une pluralité de masselottes (110) portées par ledit assemblage d'organe d'entraînement pour une rotation avec celui-ci et un mouvement radial par rapport à celui-ci;
des organes de retour (114) poussant lesdites masselottes de manière radiale vers l'intérieur;
des organes de calage (120) fixés auxdites masselottes pour un mouvement radial avec celles-ci, lesdits organes de calage reçus entre des surfaces opposées (124 et 126) d'une plaque de réaction fixée de manière relativement axiale (125) et une plaque mobile de manière axiale (128), l'une desdites surfaces (126) définissant une portion en rampe (148) s'étendant de manière radiale sortante et de manière axiale vers l'autre desdites surfaces moyen par lequel lorsque ledit organe de calage se déplace de manière radiale sortante le long de ladite portion en rampe ladite plaque mobile de manière axiale sera poussée dans une direction axiale loin de ladite plaque de réaction;
une plaque de pression mobile de manière axiale (130) rotative avec ledit assemblage d'organe d'entraînement pour appliquer une force de serrage (CF) pour engager de manière frictionnelle un organe de friction (140/142) rotatif avec ledit arbre d'entrée avec un organe de friction (136/104/130A) rotatif avec ledit organe d'entraînement, et
un organe flexible (132) interposé de manière axiale entre ladite plaque mobile de manière axiale et ladite plaque de pression pour limiter la grandeur de ladite force de serrage;
ledit moteur ayant une vitesse de ralenti connue; et
lesdits masselotte et organes de retour configurés de telle sorte que lesdits organes de calage seront positionnés de manière radiale rentrante de ladite portion en rampe de ladite surface lorsque ledit organe d'entraînement est rotatif à une vitesse qui n'est pas plus grande que ladite vitesse de ralenti.

13. Groupe motopropulseur de la revendication 12 dans lequel ledit embrayage principal à friction actionné dé manière centrifuge a un degré d'engagement dépendant de la vitesse rotationnelle dudit organe d'entraînement, ledit embrayage étant désengagé lorsque ledit organe d'entraînement est en train de tourner à ladite vitesse de ralenti du moteur, ledit embrayage devenant engagé de manière amorcée lorsque ledit organe d'entraînement est en train de tourner à une vitesse de moteur d'engagement amorcé (ES_{IE}) plus grande que ladite vitesse de ralenti du moteur (ES_{IE}>ES_{RALENTI}), ledit embrayage accomplissant un engagement maximal (74/76) lorsque ledit organe d'entraînement est en train de tourner à au moins une vitesse de moteur de verrouillage (ES_{VERROUILLAGE}), ladite vitesse de moteur de verrouillage plus grande que ladite vitesse de moteur d'engagement amorcé (ES_{VERROUILLAGE}>ES_{IE}), ledit embrayage demeurant à un engagement maximal lorsque ledit organe d'entraînement est en train de tourner à une vitesse de moteur de désengagement (ES_{DESENGAGEMENT}) inférieure à ladite vitesse de moteur de verrouillage (ES_{VERROUILLAGE}>ES_{DESENGAGEMENT})

14. Groupe motopropulseur de la revendication 12 dans lequel ladite surface (126) définissant ladite portion en rampe (148) définit une portion supplémentaire (150) situé de manière radiale sortante de ladite portion en rampe et ne s'étendant pas de manière axiale vers ladite autre surface (124) moyen par lequel un mouvement dudit organe de calage se déplace de manière axiale rentrante et sortante le long de ladite autre portion ne va pas pousser davantage ladite plaque mobile de manière axiale loin de ladite plaque de réaction.
